Europäisches Patentamt

European Patent Office

Office européen des brevets

(19)

(11) EP 0 580 216 B1

(12) **FASCICULE DE BREVET EUROPEEN**

(45) Date de publication et mention
de la délivrance du brevet:
**10.03.1999 Bulletin 1999/10**

(51) Int Cl.6: **H04J 11/00**

(21) Numéro de dépôt: **93202007.6**

(22) Date de dépôt: **08.07.1993**

(54) **Système et récepteur de signaux à répartition multiplexée de fréquences orthogonales muni d'un dispositif de synchronisation de fréquences**

Anordnung und Empfänger von orthogonalen Frequenzmultiplexsignalen mit einer Frequenzsynchronisationsschaltung

System and receiver for orthogonal frequency division multiplexed signals provided with a frequency synchronisation circuit

(84) Etats contractants désignés:
**DE FR GB IT**

(30) Priorité: **16.07.1992 FR 9208792**

(43) Date de publication de la demande:
**26.01.1994 Bulletin 1994/04**

(73) Titulaires:
• **LABORATOIRES D'ELECTRONIQUE PHILIPS S.A.S.**
**94450 Limeil-Brévannes (FR)**
Etats contractants désignés:
**FR**
• **Koninklijke Philips Electronics N.V.**
**5621 BA Eindhoven (NL)**
Etats contractants désignés:
**DE GB IT**

(72) Inventeurs:
• **Daffara, Flavio**
**F-75008 Paris (FR)**

• **Chouly, Antoine**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**WO-A-92/05646          DE-A- 3 329 506**

• **IEEE TRANSACTIONS ON CONSUMER ELECTRONICS vol. 35, no. 3, 1 Août 1989, NEW YORK (US) pages 493 - 503 BERNARD LE FLOCH ET AL. 'Digital sound broadcasting to mobile receivers.'**
• **PATENT ABSTRACTS OF JAPAN vol. 80, no. 39 (E-228)21 Février 1984 & JP-A-58 197 937 ( HITACHI SEISAKUSHO ) 17 Novembre 1983**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un récepteur et un système pour la réception de signaux émis selon une répartition multiplexée de N fréquences orthogonales sur des porteuses réparties symétriquement autour d'une fréquence centrale $f_e$, avec un spectre constitué au moins d'une partie centrale formée par N' porteuses émises (N'<N), ledit récepteur comprenant au moins un dispositif de synchronisation de fréquences qui détermine un signal de correction de synchronisation et un oscillateur local commandé par ledit signal de correction.

Un tel système et un tel récepteur ont des applications pour la réception de signaux émis selon une répartition multiplexée de fréquences orthogonales, transmis notamment par voie hertzienne, par câble, par satellite, par exemple pour des applications en télévision numérique.

Les signaux émis selon une répartition multiplexée de N fréquences orthogonales seront par la suite identifiés par l'appellation simplifiée OFDM (qui en langue anglaise signifie Orthogonal Frequency Division Multiplexing). La technique OFDM consiste à fractionner une information à transmettre en la répartissant sur un grand nombre de canaux élémentaires à bas débit. On transforme ainsi un canal à large bande fortement sélectif en un grand nombre de canaux élémentaires non sélectifs. Comme l'ensemble constitue un canal à large bande, il est peu probable que des évanouissements en cours de transmission affectent simultanément la totalité du canal. Cette technique permet également de réduire les brouillages intersymboles.

A chaque canal élémentaire correspond alors une fréquence, l'ensemble des fréquences étant symétriquement réparti autour d'une fréquence porteuse centrale. Comme à la réception il est difficilement acceptable d'utiliser des filtres sélectifs, on préfère tolérer un recouvrement des spectres mais en imposant des conditions d'orthogonalité entre les fréquences pour éliminer l'interférence intersymbole aux instants d'échantillonnage. L'ensemble du spectre d'un signal OFDM tend ainsi vers un spectre rectangulaire.

Pour éviter des problèmes de recouvrement de spectre à la réception, dû à l'échantillonnage du signal reçu, on ne transmet pas les porteuses latérales situées aux extrémités gauche et droite du spectre de fréquences. De plus, le filtrage à la réception peut être réalisé avec des fronts moins raides.

A la réception, les signaux reçus doivent être démodulés puis décodés pour restituer les informations d'origine. Cette démodulation met en oeuvre un oscillateur local dont la fréquence doit être asservie à la fréquence d'émission à l'aide d'un signal de correction de synchronisation.

L'article "Digital Sound Broadcasting to Mobile Receivers" par B. Le Floch et al, IEEE Transactions on Consumer Electronics, volume 35, n°3, August 1989 décrit un dispositif de contrôle automatique de fréquence (AFC) qui opère par détection de l'écart de phase entre le signal reçu et le symbole estimé de la constellation. Il peut ainsi détecter un écart de fréquence maximal de $\pm$ 1/8T entre l'oscillateur local de l'émetteur et l'oscillateur local du récepteur où T est la durée symbole. On peut en déduire que, par exemple, pour une durée symbole T = 160 µs et une fréquence porteuse $f_e$ = 500 MHz, la plage d'accrochage est de 781,25 Hz ce qui demande un oscillateur local (pour le récepteur) à très grande précision ($\Delta f/f_e$) = 1,56 p.p.m et très stable.

L'inconvénient d'un tel dispositif est donc la nécessité d'avoir un oscillateur local très précis, donc très coûteux, puisque la plage d'acquisition maximale est de $\pm$ 1/8T. Ainsi avec de tels dispositifs de synchronisation le domaine d'acquisition est très étroit et le récepteur ne peut pas être automatiquement accrochélorsque la perte de synchronisation est importante.

Le but principal de l'invention est donc d'accroître la plage acquisition du dispositif de synchronisation. Ceci doit être obtenu avec un oscillateur local peu précis donc d'un coût moins élevé, pour des applications notamment Grand Public, par exemple en télévision numérique.

Ce but est atteint avec un récepteur et un système de transmission muni d'un émetteur et d'un récepteur du type décrit dans le préambule pour lequel ledit spectre comprend également une partie latérale droite et une partie latérale gauche formées chacune par (N-N')/2 porteuses non émises, et le dispositif de synchronisation de fréquences est prévu pour déterminer le signal de correction en mesurant une différence d'énergie reçue sur au moins un couple de porteuses non émises, un couple étant formé d'une porteuse latérale droite non émise et d'une porteuse latérale gauche non émise symétrique de la précédente par rapport à la fréquence centrale $f_e$.

Ainsi avantageusement, on accroît par un facteur au moins égal à 100, l'étendue du domaine d'acquisition de la synchronisation par rapport au document cité, dans le cas où, par exemple, N-N' $\geq$ 26 (13 porteuses non émises de chaque côté). Ceci réduit sérieusement le coût de l'oscillateur.

Lorsqu'il opère en mode d'accrochage, le dispositif de synchronisation de fréquences opère sur plusieurs couples de porteuses latérales non émises. Lorsqu'il opère en mode permanent, le dispositif de synchronisation opère sur un couple de porteuses latérales non émises qui sont les plus proches de la fréquence centrale $f_e$. Un signal de commande peut commuter le récepteur selon l'un ou l'autre mode.

Ces différents aspects de l'invention et d'autres encore seront apparents et élucidés à partir des modes de réalisation décrits ci-après.

L'invention sera mieux comprise à l'aide des figures suivantes, données à titre d'exemples non limitatifs, qui représentent :

Figure 1 : un schéma bloc d'un système émetteur-récepteur de signaux numériques.

Figure 2 : un schéma d'un dispositif de synchronisation connu.

Figure 3 : une représentation du spectre de fréquences d'un signal OFDM.

Figure 4 : un schéma d'un modulateur de signaux OFDM.

Figure 5 : un schéma d'une partie d'un récepteur muni d'un dispositif de synchronisation selon l'invention.

Figure 6 : deux courbes montrant les variations du signal de correction avant (A) et après (B) linéarisation.

Figure 7 : un schéma analogue à celui de la figure 5 complété par un filtre de linéarisation.

Figure 8 : un schéma d'un dispositif de synchronisation selon l'invention opérant soit en mode d'acquisition soit en mode permanent.

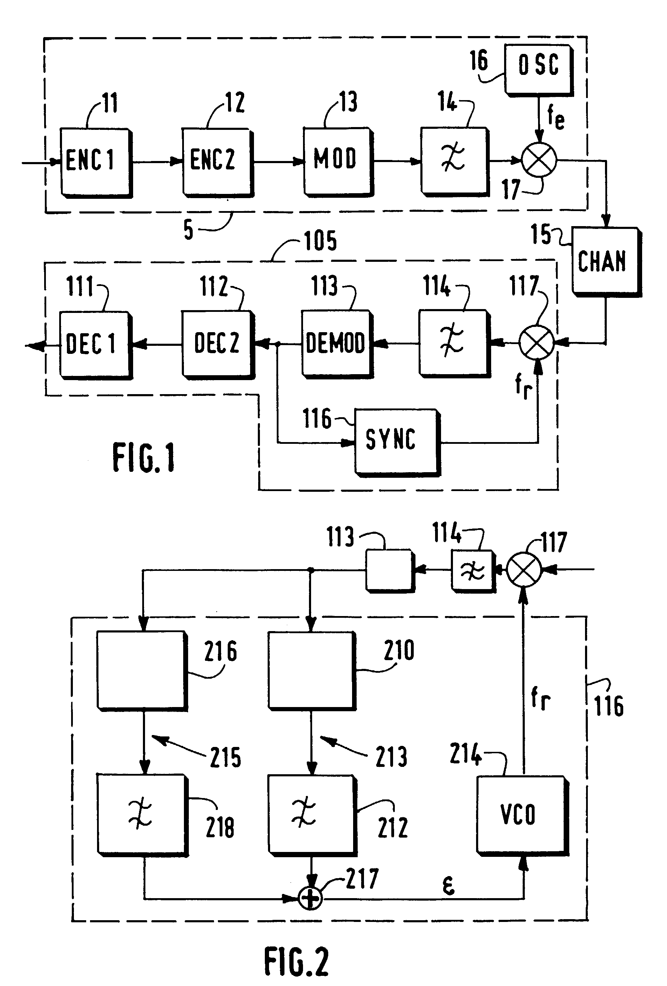

La figure 1 représente un schéma-bloc d'un système de transmission numérique formé d'un émetteur 5 et d'un récepteur 105 qui communiquent à travers un canal CHAN 15. Il peut s'agir de liaisons hertziennes, de liaisons par satellite ou de liaisons par câbles. L'émetteur 5 comprend en série :

- un codeur de source ENC1 11 (qui peut ne pas exister),
- un codeur de canal ENC2 12,
- un modulateur OFDM MOD 13,
- un filtre d'émission 14,
- un oscillateur OSC 16 qui génère une porteuse $f_e$,
- un mélangeur 17 par la porteuse $f_e$.

Pour une application de transmission de signaux TV numérisés avec une qualité meilleure que celle obtenue par la norme PAL, le codeur de source 11 délivre un débit binaire de l'ordre de 8 Mbits/s. Ces échantillons sont codés par le codeur de canal 12 pour les rendre non vulnérables aux imperfections du canal. Le modulateur 13 adapte ensuite les échantillons numériques au canal de transmission par exemple un canal de transmission par voie terrestre (exemple : diffusion sur une bande de 8 MHz).

Le récepteur 105 effectue à la réception des opérations inverses de celles effectuées à l'émission. Pour cela, il comprend (à la sortie du canal 15) :

- un mélangeur 117 qui multiplie le signal reçu par une porteuse locale régénérée $f_r$,
- un filtre de réception 114,
- un démodulateur OFDM DEMOD 113,
- un décodeur de canal DEC2 112,
- un décodeur de source DEC1 111 (qui peut ne pas exister),
- un dispositif SYNC de synchronisation de porteuse 116 qui génère la porteuse régénérée $f_r$.

Pour que la description soit claire, les mécanismes connus mis en oeuvre à l'émission sont tout d'abord présentés.

La figure 2 représente un schéma d'un dispositif 116 de synchronisation connu. A la sortie du démodulateur 113, on connecte un détecteur de fréquences 210 suivi d'un filtre 212 qui délivre un signal de correction ε qui est appliqué à un oscillateur local 214, commandé en tension, qui délivre la porteuse locale régénérée $f_r$ qui est introduite dans le mélangeur 117. Ainsi tout écart de fréquence entre l'oscillateur local 214 et la fréquence de l'oscillateur 16 de l'émetteur donne lieu à un signal de correction ε plus ou moins important selon la valeur de cet écart. Une telle boucle de contrôle de fréquence est classique en transmission de données numériques. Selon les modulations mises en oeuvre, il peut être nécessaire de compléter la synchronisation de fréquences par une synchronisation de phase. Dans ce cas, on dispose, en parallèle avec la branche 213 relative à la synchronisation de fréquences, un détecteur de phase 216 suivi d'un filtre 218. Les signaux de correction issus des branches de synchronisation de fréquences 213 et de phase 215 sont additionnés dans un organe 217 pour être appliqués à l'oscillateur local 214.

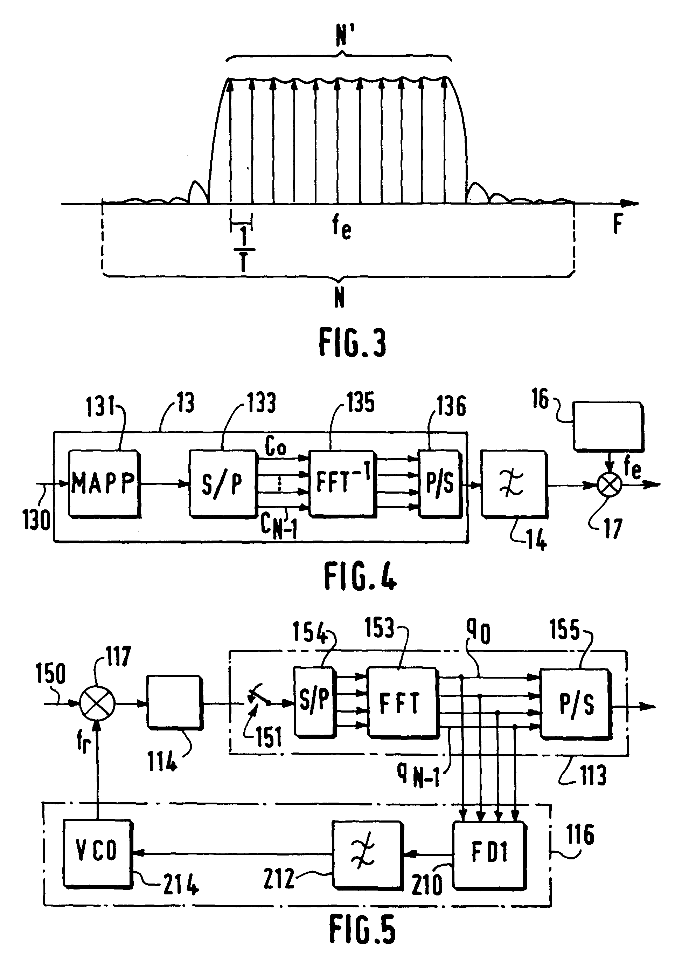

La figure 3 représente un spectre de fréquences d'émission d'un signal OFDM formé de N porteuses équidistantes entre elles par un écart de fréquence 1/T où T est la fréquence symbole. Ce canal est centré sur une fréquence centrale $f_e$. Pour des raisons de recouvrement de spectre, déjà exposées, on n'émet pas toutes les fréquences constituant le canal. Seules les N' porteuses centrales sont émises, alors que (N-N') porteuses non émises sont réparties symétriquement de part et d'autre des porteuses centrales émises. Par simplification de langage, on les désignera par les porteuses latérales droite et gauche.

A l'émission, les porteuses émises sont modulées par les signaux numériques à transmettre selon les principes connus. La figure 4 représente le schéma du modulateur 13 qui fournit des données au filtre 14 puis au mélangeur 17 connecté à l'oscillateur 16. Les données d'entrée numérisées présentes sur l'entrée 130 sont introduites dans un organe 131 d'affectation binaire MAPP qui répartit les données d'entrée en symboles codés d'une constellation. Les symboles codés qui apparaissent en série en sortie de l'organe 131 subissent une conversion série/parallèle S/P 133 pour donner lieu à N symboles complexes $C_k$ ($0 \leq k < N-1$). Un symbole complexe $C_k$ est utilisé pour moduler une porteuse de fréquence $f_k$ avec $f_k = k/T$ (en raison de l'orthogonalité) où T est la durée d'un symbole OFDM et k l'indice de la porteuse. La combinaison de toutes les porteuses $f_k$, modulées en vue de générer le signal OFDM global, revient à effectuer une transformée de Fourier inverse dans un dispositif 135. Dans le cas particulier où N est une puissance de 2, la transformée de Fourier inverse peut être effectuée en utilisant l'algorithme de transformée rapide inverse ($FFT^{-1}$) comme indiqué sur la figure 4. Ceci permet de réduire la complexcité du circuit. Les N signaux issus du dispositif 135 subissent une conversion parallèle-série 136. Après filtrage 14, le signal issu du filtre 14 est mélangé avec la fréquence porteuse $f_e$ de l'oscillateur 16. Ces techniques de modulation sont bien connues de l'homme du métier.

L'invention est concernée essentiellement par la synchronisation de porteuse à la réception pour que le récepteur opère avec une fréquence égale à celle utilisée par l'émetteur. Grâce à la symétrie du spectre OFDM, un écart de fréquence peut être détecté en comparant la puissance reçue sur la partie gauche des porteuses non émises et la puissance reçue sur la partie droite des porteuses non émises. Le signal d'erreur est alors donné par :

$$\varepsilon^f = \sum_{k=(N+N')/2}^{N-1} |q_k|^2 - \sum_{k=0}^{\frac{(N-N')}{2}-1} |q_k|^2$$

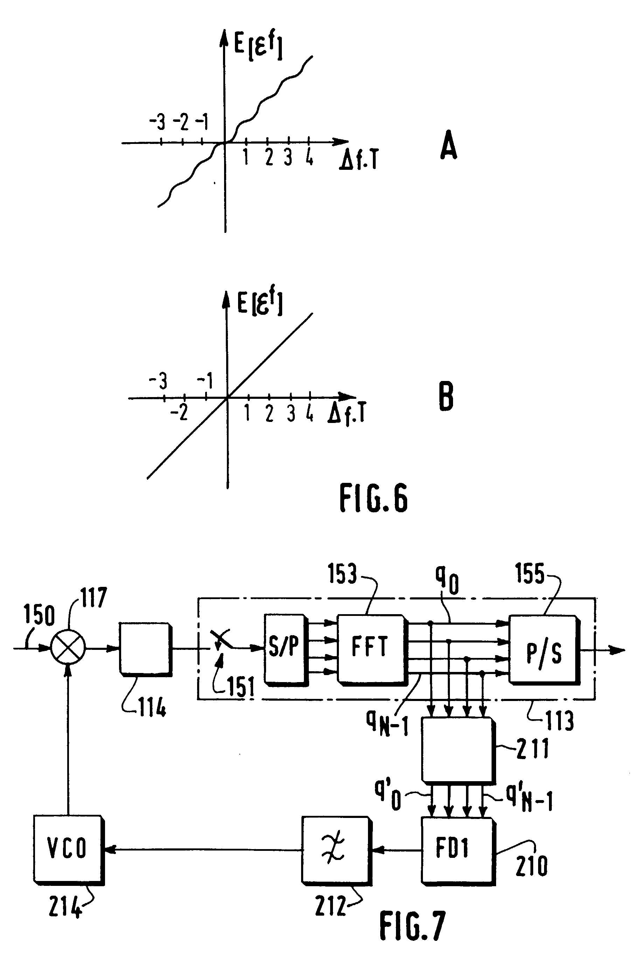

La figure 5 représente un démodulateur 113 qui opère à la réception les opérations inverses de celles mises en oeuvre à l'émission. Pour cela, il comprend un échantillonneur 151 qui opère à une cadence N/T où N est le nombre total de porteuses du canal OFDM et 1/T la fréquence symbole. Les échantillons ainsi prélevés subissent une conversion série-parallèle 154 puis sont introduits dans un dispositif 153 qui effectue une transformée de Fourier discrète (de préférence rapide FFT) pour délivrer en parallèle $q_k$ échantillons ($0 \leq k \leq N-1$) qui subissent une transformation parallèle-série dans un dispositif 155. Les échantillons reçus sur l'entrée 150 arrivent sur un mélangeur 117 pour être mélangés avec une porteuse régénérée $f_r$ issue du dispositif de synchronisation de fréquence 116 comme cela est indiqué sur la figure 1. Selon l'invention, le dispositif de synchronisation de fréquence 116 prélève tous les échantillons $q_k$ en sortie du dispositif 153 (FFT) et détermine l'énergie présente sur les porteuses latérales non émises. Le dispositif 116 comprend un détecteur de fréquence 210 qui reçoit les échantillons $q_k$ des porteuses latérales non émises, le filtre passe-bas 212 et l'oscillateur VCO 214. Le dispositif 116 de synchronisation de fréquences doit être apte à réduire à zéro l'écart de fréquence $\Delta f$ entre la fréquence porteuse $f_e$ à l'émission et la fréquence régénérée $f_r$ à la réception ($\Delta f = f_e - f_r$). En présence d'une erreur de fréquence $\Delta f$ non nulle, la densité de puissance spectrale n'est pas symétrique à la réception autour de la fréquence centrale $f_e$. On utilise donc cette dissymétrie pour générer un signal d'erreur proportionnel à $\Delta f$.

L'étendue du domaine d'acquisition du dispositif de synchronisation est environ égal à :

$$|\Delta f.T|_{max} = (N-N')/2$$

Compte tenu des valeurs classiques données à N et N' (N = 1024, N' = 800), ceci conduit à un domaine d'acquisition $\Delta f.T$ d'environ ± 100. En conséquence, on peut à la réception utiliser un oscillateur ayant une précision relative moins élevée que celle de l'oscillateur du dispositif de synchronisation du document cité. En effet, par exemple pour une durée symbole T = 160 µs et une fréquence porteuse de $f_e$ = 500 MHz, on obtient une précision relative de $\Delta f/f_e$ = 1250 p.p.m., valeur qui est environ 1000 fois plus élevée que ce qui peut être déduit du document cité. Une courbe des valeurs moyennes $E[\varepsilon^f]$ en fonction du paramètre $\Delta f.T$ est représentée sur la figure 6-A. On observe que cette courbe est formée d'ondulations autour d'une progression sensiblement linéaire. Lorsque les écarts de fréquences sont importants ($\Delta f.T$ grand, mode d'accrochage), le dispositif de synchronisation les réduit jusqu'à des valeurs proches de zéro. Lorsque les écarts de fréquences sont proches de zéro ($\Delta f.T$ petit, mode permanent), la linéarité de la courbe n'est pas satisfaisante. On observe que la courbe de la figure 6-A présente vers $\Delta f.T \approx 0$ une pente nulle. Autour du point zéro, cette courbe peut s'approximer par un polynôme d'ordre 3. La sensibilité du dispositif de synchronisation peut alors devenir insuffisante ce qui implique une accentuation des phénomènes de gigue.

Pour accroître les performances du dispositif de synchronisation en mode permanent, c'est-à-dire vers l'origine de la courbe de la figure 6-A, on adjoint au détecteur de fréquence 210 un filtre 211 de linéarisation (figure 7). Ce filtre de linéarisation transforme chaque échantillon $q_k$ en un échantillon $q'_k$ tel que :

$$q'_k = q_k - \frac{1}{2} q_{k-1} - \frac{1}{2} q_{k+1}$$

Ainsi à chaque échantillon $q_k$, on soustrait la moitié de chacun des deux échantillons latéraux $q_{k-1}$ et $q_{k+1}$.

Le détecteur de fréquences calcule alors le signal d'erreur selon :

$$e'^f = \sum_{k = (N+N')/2}^{N-1} \left| q'_k \right|^2 - \sum_{k = 0}^{\frac{N-N'}{2}-1} \left| q'_k \right|^2$$

Néanmoins, lorsque le dispositif de synchronisation de fréquences est en mode permanent de fonctionnement, il peut persister un phénomène de gigue qui entraîne de très légères fluctuations de fréquences autour de $\Delta f \simeq 0$ . Dans un mode particulier de réalisation, on calcule le signal de correction non plus avec l'énergie reçue sur la totalité des porteuses latérales gauche/droite non émises mais uniquement sur la première porteuse latérale gauche non émise et la première porteuse latérale droite non émise les plus proches de la fréquence centrale.

On obtient un signal de correction $e^f$ qui s'écrit :

$$e_2^f = \left| q'_{\frac{N+N'}{2}} \right|^2 - \left| q'_{\frac{N-N'}{2}-1} \right|^2$$

Ce signal de correction $e^f$ sert lorsque le dispositif de synchronisation de fréquences est en mode permanent. En effet, en mode permanent, c'est-à-dire lorsque l'écart de fréquence devient très faible (par exemple $\Delta f.T < 0,02$), l'utilisation de 2 porteuses suffit pour réduire cet écart à zéro et en plus, permet de réduire la gigue par rapport à la gigue introduite par le dispositif utilisant toutes les porteuses non émises. En mode d'accrochage (par exemple $\Delta f.T$ très grand), il est nécessaire d'utiliser un nombre assez grand de porteuses latérales (au maximum N-N') pour augmenter la plage d'acquisition. En pratique, le nombre de porteuses latérales utilisées en mode d'accrochage est déterminé en fonction de la plage d'acquisition maximale qu'on veut avoir.

Il est possible de disposer d'un premier détecteur de fréquences FD1 qui utilise la totalité des porteuses latérales non émises et qui agit en mode d'accrochage. A ce premier détecteur de fréquences FD1, on adjoint un second détecteur de fréquences FD2 qui utilise seulement la première porteuse latérale gauche et la première porteuse latérale droite non émises et qui agit en mode permanent. Ils peuvent avoir des moyens matériels communs.

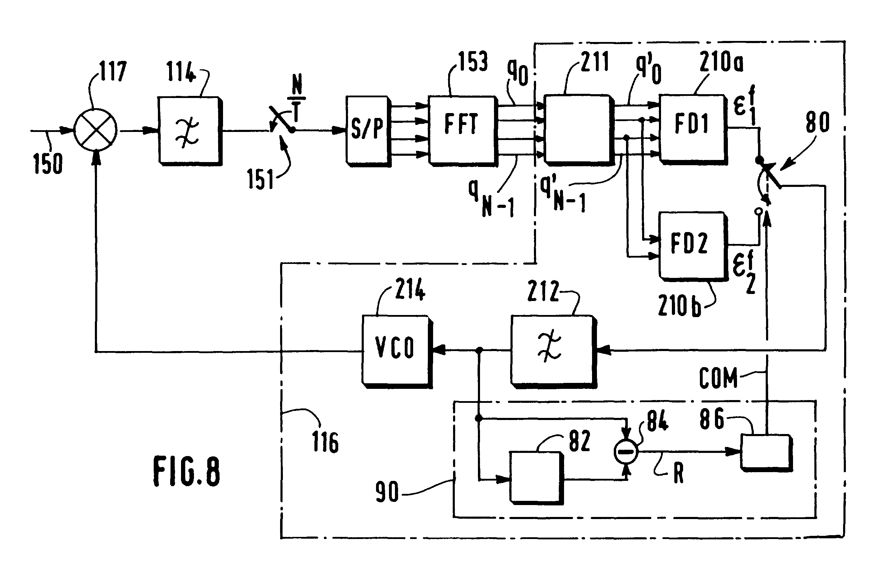

L'invention concerne également un récepteur qui se synchronise en commutant automatiquement du mode permanent au mode d'accrochage et inversement en fonction des conditions de réception. La figure 8 représente un dispositif de synchronisation 116 comprenant un détecteur FD1 210a et un détecteur FD2 210b qui peuvent être mis en oeuvre par un commutateur 80 pour activer l'oscillateur VCO 214 à travers le filtre de boucle 212. Les autres éléments sont représentés par les mêmes repères que précédemment.

Pour déterminer si le dispositif de synchronisation doit être positionné en mode d'accrochage ou en mode permanent, on utilise un circuit 90 de détection de mode. Pour cela, on prélève une partie du signal d'erreur à la sortie du filtre de boucle 212. Ce signal est retardé dans un retardateur 82. Le signal retardé est retranché du signal non retardé dans un bloc 84 qui fournit un résultat R. La valeur absolue du résultat R est comparée à un seuil Th dans un comparateur 86 qui délivre un signal de commutation COM. Ce dernier active :

- soit le mode d'accrochage si R > Th,
- soit le mode permanent si R ≤ Th.

## Revendications

1. Système de transmission comprenant un émetteur (5) pour émettre des signaux sur N porteuses réparties symétriquement autour d'une fréquence centrale $f_e$, avec un spectre comprenant au moins une partie centrale formée par N' porteuses émises (N'< N), cet émetteur étant lié à un récepteur (105) comprenant au moins un dispositif (116) de synchronisation de fréquences qui détermine un signal de correction de synchronisation et un oscillateur local (214) commandé par ledit signal de correction, caractérisé en ce que ledit spectre comprend également une partie latérale droite et une partie latérale gauche formées chacune par (N - N')/2 porteuses non émises et en ce que le dispositif (116) de synchronisation de fréquences est prévu pour déterminer le signal de correction en mesurant une différence d'énergie reçue par au moins un couple de fréquences, un couple étant formé d'une porteuse latérale droite non émise et d'une porteuse latérale gauche non émise symétrique de la précédente par rapport à la fréquence centrale $f_e$.

2. Système de transmission selon la revendication 1 caractérisé en ce que pour opérer en mode d'accrochage, le récepteur comprend un détecteur de fréquences FD1 (210a) qui opère sur plusieurs couples de porteuses latérales non émises.

3. Système de transmission selon la revendication 1 caractérisé en ce que pour opérer en mode permanent, le récepteur comprend un détecteur de fréquences FD2 (210b) qui opère sur un couple de porteuses latérales non émises qui sont les plus proches de la fréquence centrale $f_e$.

4. Système de transmission selon les revendications 2 et 3 caractérisé en ce qu'il comprend un dit détecteur FD1, un dit détecteur FD2 et des moyens de commutation (80) qui commutent le récepteur soit en mode d'accrochage soit en mode permanent à l'aide d'un signal de commande COM issu d'un circuit de décision de mode (90).

5. Système de transmission selon la revendication 4 caractérisé en ce que le circuit de décision de mode (90) détermine un écart R entre ledit signal de correction et une version retardée du signal de correction précédent, un circuit de comparaison (86) comparant ledit écart R à un seuil Th prédéterminé, ledit signal de commande COM validant le mode d'accrochage lorsque R > Th et validant le mode permanent lorsque R ≤ Th.

6. Récepteur (105) de signaux émis selon une répartition multiplexée de N fréquences orthogonales sur des porteuses réparties symétriquement autour d'une fréquence centrale $f_e$, avec un spectre comprenant au moins une partie centrale formée par N' porteuses émises (N'<N), ledit récepteur comprenant au moins un dispositif (116) de synchronisation de fréquences qui détermine un signal de correction de synchronisation et un oscillateur local (214) commandé par ledit signal de correction, caractérisé en ce que ledit spectre comprend également une partie latérale droite et une partie latérale gauche formées chacune par (N-N')/2 porteuses non émises et en ce que le dispositif (116) de synchronisation de fréquences est prévu pour déterminer le signal de correction en mesurant une différence d'énergie reçue sur au moins un couple de porteuses non émises, un couple étant formé d'une porteuse latérale droite non émise et d'une porteuse latérale gauche non émise symétrique de la précédente par rapport à la fréquence centrale $f_e$.

7. Récepteur selon la revendication 6 caractérisé en ce que pour opérer en mode d'accrochage, le récepteur comprend un détecteur de fréquences FD1 (210a) qui opère sur plusieurs couples de porteuses latérales non émises.

8. Récepteur selon la revendication 6 caractérisé en ce que pour opérer en mode permanent, le récepteur comprend un détecteur de fréquences FD2 (210b) qui opère sur un couple de porteuses latérales non émises qui sont les plus proches de la fréquence centrale $f_e$.

9. Récepteur selon les revendications 7 et 8 caractérisé en ce qu'il comprend un dit détecteur FD1, un dit détecteur FD2 et des moyens de commutation (80) qui commutent le récepteur soit en mode d'accrochage soit en mode permanent à l'aide d'un signal de commande COM issu d'un circuit de décision de mode (90).

10. Récepteur selon la revendication 9 caractérisé en ce que le circuit de décision de mode (90) détermine un écart R entre ledit signal de correction et une version retardée du signal de correction précédent, un circuit de comparaison (86) comparant ledit écart R à un seuil Th prédéterminé, ledit signal de commande COM validant le mode d'accrochage lorsque R > Th et validant le mode permanent lorsque R ≤ Th.

**Patentansprüche**

1. Übertragungssystem mit einem Sender (5) zum Senden von Signalen aufN symmetrisch um eine zentrale Frequenz $f_e$ verteilten Trägern, mit einem Spektrum mit mindestens einem zentralen, aus N' gesendeten Trägern (N'< N) gebildeten Teil, wobei dieser Sender an einen Empfänger (105) gebunden ist mit mindestens einer Frequenzsynchronisationsschaltung (116), die ein Synchronisationskorrektursignal bestimmt, und einem von dem besagten Korrektursignal gesteuerten lokalen Oszillator (214), dadurch gekennzeichnet, daß das besagte Spektrum zudem einen seitlichen rechten Teil und einen seitlichen linken Teil aufweist, beide von (N - N')/2 nicht gesendeten Träger gebildet, und daß die Frequenzsynchronisationsanordnung (116) vorgesehen ist, um das Korrektursignal unter Messung des erhaltenen Energieunterschieds von mindestens einem Frequenzpaar zu bestimmen, wobei ein Paar aus einem nicht gesendeten seitlichen rechten Träger und einem nicht gesendeten seitlichen linken Träger

EP 0 580 216 B1

gebildet wird, symmetrisch zur vorhergehenden in bezug auf die Zentralfrequenz $f_e$.

2. Übertragungssystem nach Anspruch 1, dadurch gekennzeichnet, daß für die Funktion im Einschwingmodus der Empfänger einen Frequenzdetektor FD1 (210a) enthält, der auf mehrere Paare nicht gesendeter seitlicher Träger wirkt.

3. Übertragungssystem nach Anspruch 1, dadurch gekennzeichnet, daß für die Funktion im permanenten Modus der Empfänger einen Frequenzdetektor FD2 (210b) enthält, der auf ein Paare nicht gesendeter seitlicher Träger wirkt, die am nächsten an der Zentralfrequenz $f_e$ liegen.

4. Übertragungssystem nach den Ansprüchen 2 und 3, dadurch gekennzeichnet, daß es einen besagten Detektor FD1 und einen besagten Detektor FD2 und Umschaltmittel (80) enthält, die den Empfänger unter Zuhilfenahme eines aus einer Modusentscheidungsschaltung (90) kommenden Befehlssignals COM entweder auf Einschwingmodus oder auf permanenten Modus umschalten.

5. Übertragungssystem nach Anspruch 4, dadurch gekennzeichnet, daß die Modusentscheidungsschaltung (90) eine Abweichung R zwischen dem besagten Korrektursignal und einer verzögerten Version des vorhergehenden Korrektursignals bestimmt, während eine Vergleichsschaltung (86) die besagte Abweichung R mit einer vorbestimmten Schwelle Th vergleicht und das besagte Steuersignal COM den Einschwingmodus validiert, wenn R > Th, und den permanenten Modus validiert, wenn R T h .

6. Empfänger (105) von Signalen, gesendet nach einem Multiplexing von N orthogonalen Frequenzen auf symmetrisch um eine zentrale Frequenz $f_e$ verteilten Trägern, mit einem Spektrum mit mindestens einem zentralen, aus N' gesendeten Trägern (N'< N) gebildeten Teil, wobei der besagte Empfänger eine Frequenzsynchronisationsschaltung (116) enthält, die ein Synchronisationskorrektursignal bestimmt, und einen von dem besagten Korrektursignal gesteuerten lokalen Oszillator (214), dadurch gekennzeichnet, daß das besagte Spektrum zudem einen seitlichen rechten Teil und einen seitlichen linken Teil aufweist, beide von (N - N')/2 nicht gesendeten Träger gebildet, und daß die Frequenzsynchronisationsanordnung (116) vorgesehen ist, um das Korrektursignal unter Messung des erhaltenen Energieunterschieds über mindestens ein nicht gesendetes Frequenzpaar zu bestimmen, wobei ein Paar aus einem nicht gesendeten seitlichen rechten Träger und einem nicht gesendeten seitlichen linken Träger gebildet wird, symmetrisch zur vorhergehenden in bezug auf die Zentralfrequenz $f_e$.

7. Empfänger nach Anspruch 6, dadurch gekennzeichnet, daß für die Funktion im Einschwingmodus der Empfänger einen Frequenzdetektor FD1 (210a) enthält, der auf mehrere Paare nicht gesendeter seitlicher Träger wirkt.

8. Empfänger nach Anspruch 6, dadurch gekennzeichnet, daß für die Funktion im permanenten Modus der Empfänger einen Frequenzdetektor FD2 (210b) enthält, der auf ein Paare nicht gesendeter seitlicher Träger wirkt, die am nächsten an der Zentralfrequenz $f_e$ liegen.

9. Empfänger nach den Ansprüchen 7 und 8, dadurch gekennzeichnet, daß es einen besagten Detektor FD1 und einen besagten Detektor FD2 und Umschaltmittel (80) enthält, die den Empfänger unter Zuhilfenahme eines aus einer Modusentscheidungsschaltung (90) kommenden Befehlssignals COM entweder auf Einschwingmodus oder auf permanenten Modus umschalten.

10. Empfänger nach Anspruch 9, dadurch gekennzeichnet, daß die Modusentscheidungsschaltung (90) eine Abweichung R zwischen dem besagten Korrektursignal und einer verzögerten Version des vorhergehenden Korrektursignals bestimmt, während eine Vergleichsschaltung (86) die besagte Abweichung R mit einer vorbestimmten Schwelle Th vergleicht und das besagte Steuersignal COM den Einschwingmodus validiert, wenn R > Th, und den permanenten Modus validiert, wenn RTh.

Claims

1. A transmission system comprising a transmitter (5) for transmitting signals on N carriers distributed symmetrically around a center frequency $f_e$, which signals have a spectrum comprised of a central part formed by N' transmitted carriers (N' < N), this transmitter being connected to a receiver (105) which comprises at least a frequency synchronizer (116) which determines a synchronization correction signal, and a local oscillator (214) controlled by said correction signal, characterized in that said spectrum also includes a right-hand side part and a left-hand side

7

part formed each by (N-N')/2 non-transmitted carriers, and in that the frequency synchronizer (116) determines the correction signal by measuring a difference of power received via at least a pair of frequencies, a pair being formed by a non-transmitted right-hand side carrier and a non-transmitted left-hand side carrier symmetrical with the previous carrier with respect to the center frequency $f_e$.

2. A transmission system as claimed in Claim 1, characterized in that, for operating in the lock-on mode, the receiver comprises a frequency detector FD1 (210a) which operates with various pairs of non-transmitted side carriers.

3. A transmission system as claimed in Claim 1, characterized in that, for operating in the permanent mode, the receiver comprises a frequency detector FD2 (210b) which operates with a pair of non-transmitted side carriers which are nearest to the center frequency $f_e$.

4. A transmission system as claimed in Claims 2 and 3, characterized in that it comprises a said detector FD1, a said detector FD2 and switching means (80) which switch the receiver either to the lock-on mode or to the permanent mode by a control signal COM produced by the mode decision circuit (90).

5. A transmission system as claimed in Claim 4, characterized in that the mode decision circuit (90) determines a difference R between said correction signal and a delayed version of the preceding correction signal, a comparing circuit (86) comparing said difference R with a predetermined threshold Th, said control signal COM enabling the lock-on mode if R > Th and enabling the permanent mode if R ≤ Th.

6. A receiver (105) for receiving signals transmitted according to an orthogonal N-frequency-division multiplexing technique on carriers distributed symmetrically around a center frequency $f_e$, which signals have a spectrum comprised of at least a central part formed by N' transmitted carriers (N' < N), said receiver including at least a frequency synchronizer (116) which determines a synchronization correction signal, and a local oscillator (214) controlled by said correction signal, characterized in that said spectrum also includes a right-hand side part and a left-hand side part formed each by (N-N')/2 non-transmitted carriers, and in that the frequency synchronizer (116) determines the correction signal by measuring a difference of power received via at least a pair of non-transmitted carriers, a pair being formed by a non-transmitted right-hand side carrier and a non-transmitted left-hand side carrier symmetrical with the previous carrier with respect to the center frequency $f_e$.

7. A receiver as claimed in Claim 6, characterized in that, for operating in the lock-on mode, the receiver comprises a frequency detector FD1 (210a) which operates with various pairs of non-transmitted side carriers.

8. A receiver as claimed in Claim 6, characterized in that, for operating in the permanent mode, the receiver comprises a frequency detector FD2 (210b) which operates with a pair of non-transmitted side carriers which are nearest to the center frequency $f_e$.

9. A receiver as claimed in Claims 7 and 8, characterized in that it comprises a said detector FD1, a said detector FD2 and switching means (80) which switch the receiver either to the lock-on mode or to the permanent mode by a control signal COM produced by the mode decision circuit (90).

10. A receiver as claimed in Claim 9, characterized in that the mode decision circuit (90) determines a difference R between said correction signal and a delayed version of the preceding correction signal, a comparing circuit (86) comparing said difference R with a predetermined threshold Th, said control signal COM enabling the lock-on mode if R > Th and enabling the permanent mode if R ≤ Th.

FIG.1

FIG.2

FIG.3

FIG.4

FIG.5

FIG.6

FIG.7

FIG.8